# EUROPÄISCHE PATENTANMELDUNG

(11) **EP 0 908 776 A1**
(43) Veröffentlichungstag der Anmeldung: **14.04.1999**
(21) Anmeldenummer: 98117753.8
(22) Anmeldetag: 18.09.1998
(51) Int. Cl.: G03D 13/00

(54) **Fotolabor mit Weitergabeeinrichtung**

(30) Priorität: 13.10.1997 DE 29718125 U
(71) Anmelder: GRETAG IMAGING AG, CH-8105 Regensdorf (CH)
(72) Erfinder: Knecht, Hugo, 8165 Schöfflisdorf (CH); Wacker, Rudolf, 5022 Rombach (CH); Heller, Martin, 8050 Zürich (CH)
(74) Vertreter: Schwabe - Sandmair - Marx

(57) **Zusammenfassung**

Die Erfindung betrifft eine Anordnung zur Bearbeitung von licht- bzw. fotoempfindlichem Material, mit einer Abbildungseinrichtung (200), in der das zu Einzelabschnitten vereinzelte Material in einer Vorzugsrichtung einer Fördereinrichtung (206) beförderbar ist, einer Materialbearbeitungseinrichtung (100) mit einer Bewegungseinrichtung, in der das mit einer Abbildung versehene, vereinzelte Material in eine überwiegende Richtung (Z, -Z; X, -X) befördert wird, wobei die Vorzugsrichtung (-Y) und die überwiegende Richtung (Z, -Z; X, -X) voneinander um einen Winkel abweichen, und wobei eine Einrichtung (10) am Endabschnitt der Abbildungseinrichtung (200) das vereinzelte Material zur Materialbearbeitungseinrichtung (100) weitergibt, wobei erfindungsgemäß die Weitergabeeinrichtung (10) derart angeordnet ist, daß das vereinzelte licht- bzw. fotoempfindliche Material unter der Fördereinrichtung (206) hindurch an die Materialbearbeitungseinrichtung (100) weitergebbar ist.

## Beschreibung

Die Erfindung betrifft eine Anordnung zur Bearbeitung von licht- bzw. fotoempfindlichem Material gemäß dem Oberbegriff des Patentanspruchs 1, wie sie beispielsweise aus der EP 0 300 967 A1 bekannt ist.

Eine derartige Anordnung umfaßt eine Abbildungseinrichtung, die üblicherweise als Printer bezeichnet wird. Hier wird auf einem licht- bzw. fotoempfindlichen Material eine Abbildung erzeugt, wobei das licht- bzw. fotoempfindliche Material in der Form eines von einer Rolle abgetrennten Abschnittes über ein Förderband in den Wirkungskreis des Printers transportiert wird. Im Wirkungsbereich des Printers wird dann das Negativ auf das lichtempfindliche Material aufbelichtet und nach der Belichtung an eine Materialbearbeitungseinrichtung weitergeleitet, in der das belichtete lichtempfindliche Material entwickelt werden kann.

Bei herkömmlichen Anordnungen dieser Art war es üblich, entweder das licht- bzw. fotoempfindliche Material als durchlaufendes Band zu verarbeiten oder aber den Printer und die Materialbearbeitungseirrichtung bzw. die Entwicklungsstation in einer Reihe anzuordnen, um einzelne Papierbildabschnitte bearbeiten zu können.

Um ein kompakteres Gerät zu realisieren, wurde in der gattungsgemäßen Anordnung der Printer im Vorzugsweise rechten Winkel zu der Entwicklungsstation angeordnet, wobei einzelne Papierbildabschnitte über eine schwenkbare Einrichtung von der Förderebene des Printers in die Förderebene der Entwicklereinrichtung weitergeleitet werden können. Jedoch gibt es bei der gattungsgemäßen Anordnung das Problem, daß die Weitergabeeinrichtung durch den Belichtungsweg des Printers hindurchgeschwenkt werden muß, so daß größere Totzeiten entstehen, da während des Hinund des Zurückschwerkens eine Belichtung nicht möglich ist. Zudem ist die Einrichtung der gattungsgemäßen Art, die zur Weitergabe des Papierbildabschnittes verwendet wird, relativ platzaufwendig und vergrößert die gattungsgemäße Anordnung in vertikaler Richtung.

Es ist die Aufgabe der vorliegenden Erfindung, eine Anordnung zur Bearbeitung von fotoempfindlichen Material so weiterzubilden, daß deren Arbeitsgeschwindigkeit entscheidend verbessert werden kann.

Diese Aufgabe wird durch eine Anordnung mit den Merkmalen im Patentanspruch 1 gelöst. Zweckmäßige Ausgestaltungen der erfindungsgemäßen Anordnung gehen aus den Unteransprüchen hervor.

Es sei in bezug auf den Gegenstand des Patentanspruchs 1 angemerkt, daß eine entsprechende Weitergabeeinrichtung auch verwendet werden kann, wenn vereinzelte Papierfotos beispielsweise von der Entwicklungsstation einer Trocknungsstation oder dergleichen übergeben werden. Die Erfindung bietet eine äußerst platzsparende Lösung.

Die Vorteile, die gemäß der Erfindung zu erzielen sind, beruhen darauf, daß die Weitergabeeinrichtung derart angeordnet ist, daß das vereinzelte licht- bzw. fotoempfindliche Material unter der Förderstrecke der Abbildungseinrichtung, also etwa der Papierbühne, hindurch an die Materialbearbeitungseinrichtung weitergegeben werden kann. Auf diese Weise wird der Strahlengang des Printers in keiner Weise und in keiner Phase der Tätigkeit der erfindungsgemäßen Anordnung gestört, so daß ohne irgendwelche Wartezeiten im Printer Belichtungsvorgänge durchgeführt werden können. Darüber hinaus kann eine Weitergabeeinrichtung, die unter der Förderstrecke des Printers angeordnet ist, sehr viel platzsparender ausgebildet werden bzw. zu einer wesentlich gedrängteren Konstruktion der Gesamtanordnung führen.

Gemäß der Erfindung können die Einzelblätter zwar in der überwiegenden Richtung vertikal hinaufgeleitet werden, sie können aber auch hinuntergeleitet oder horizontal weiterbewegt werden. Auch dazwischenliegende Richtungen sind problemlos realisierbar.

Dabei kann es von Vorteil sein, wenn die Weitergabeeintrichtung schwenkbar bzw. lenkbar ausgebildet ist, um das Material von der Fördereinrichtung der Belichtungseinrichtung bzw. des Printers zu der Bewegungseinrichtung der Materialverarbeitungseinrichtung bzw. der Entwicklungseinrichtung weiterzugeben. Dabei behindert, wie oben bereits angedeutet, die Weitergabeeinrichtung den eigentlichen Belichtungsprozeß in keiner Weise.

Die Weitergabeeinrichtung umfaßt vorteilhafterweise eine Festlegungsvorrichtung, die das Material bei der Weitergabe insbesondere definiert zu halten vermag. Die Festlegungsvorrichtung kann dabei divers ausgebildet sein, wobei etwa eine betätigbare Klemmleiste, ein Riemen aus einem elastischen Material, beispielsweise Gummi oder dergleichen, oder Klipse, die beispielsweise elektromagnetisch zu betätigen sind, an der Weitergabeeinrichtung in entsprechender Weise vorgesehen sein können, um das Material von der Fördereinrichtung in einer definierten Position und Stellung zu der Bewegungseinrichtung zu überführen.

Vorteilhafterweise kann die Weitergabeeinrichtung auch einen Leitabschnitt umfassen, der das Material während der Weitergabe bzw. während der Einleitung des Materials in die Weitergabeeinrichtung führt, aufnimmt und nach Möglichkeit auch schützt. Dabei kann der Leitabschnitt beispielsweise als ein die Weitergabeeinrichtung umgebendes Blech oder Kunststoffteil ausgebildet sein, wobei das Material bevorzugt unter dem Leitabschnitt von der Weitergabeeinrichtung aufgenommen wird.

Bevorzugt umfaßt die Weitergabeeinrichtung einen im Querschnitt runden oder kreisförmigen Aufwickelabschnitt, etwa ein Rad, eine Rolle, eine Walze oder dergleichen, auf das bzw. die das Material aufgewickelt werden kann. Dabei kann das Material nicht nur einen Teilkreis des Rades bzw. der Rolle oder Walze bedecken, sondern kann, falls der Materialabschnitt besonders groß ist, auch überlappend aufgewickelt werden. Falls der Aufwickelabschnitt bzw. das Rad oder die Rolle für bestimmte Formate von Materialabschnitten in Axialrichtung zu klein ist, kann der Materialabschnitt auch rechts und/oder links über den Aufwickelabschnitt überstehen, wobei diese überstehenden Bereiche bevorzugt durch den Leitabschnitt umgeben und geschützt werden. Der Aufwickelabschnitt kann die Festlegungsvorrichtung aufweisen, um das Material während der Weitergabe definiert festzuhalten.

Eine weitere bevorzugte Ausführungsform ergibt sich, wenn die Weitergabeeinrichtung eine Ablageplattform umfaßt, auf der das Material abgelegt wird, um weitergegeben zu werden. Dabei kann das Material von der Fördereinrichtung der Abbildungseinrichtung bzw. des Printers abgeführt werden oder auch nur einfach an deren Ende herunterfallen, um auf der Ablageplattform zu landen. Die Ablageplattform selbst kann dann beispielsweise verschwenkt werden, wobei hier eventuell das Problem auftreten könnte, daß bei der Weitergabe seltener Formate eine definierte Weiterleitung erschwert ist.

Eine weitere vorteilhafte Ausgestaltung kann sich ergeben, wenn die Weitergabeeinrichtung in einem Winkel zueinander versetzte Walzen bzw. Rollen oder dergleichen umfaßt, derart, daß diese das Material von der Vorzugsrichtung, auf der das Material auf der Fördereinrichtung bewegt wird, zu der überwiegenden Richtung übergeleitet wird, in der das Material in der Materialbearbeitungseinrichtung, beispielsweise der Entwicklungseinrichtung, befördert wird.

Wie oben bereits angedeutet, kann eine solche Weitergabeeinrichtung auch zwischen anderen Komponenten einer Anordnung zur Herstellung von einzelnen fotografischen Kopien zum Einsatz gelangen, wenn die einzelnen Komponenten in einem Winkel zueinander angeordnet werden sollen, beispielsweise um Platz einzusparen bzw. eine derartige Anordnung zu verkleinern.

Eine weitere bevorzugte Ausführungsform ergibt sich, wenn die Weitergabeeinrichtung ein Band, ein Gliederband oder dergleichen umfaßt, auf dem das Material abgelegt wird und welches das Material von der Vorzugsrichtung zur überwiegenden Richtung überzuleiten vermag.

Eine besonders bevorzugte und erprobte Ausführungsform mit Merkmalen gemäß der Erfindung ergibt sich, wenn die erfindungsgemäße Anordnung wenigstens eines der folgenden Merkmale, bevorzugt sämtliche der folgenden Merkmale, umfaßt. Dabei gehört zu diesen Merkmalen, daß die Weitergabeeinrichtung eine Rolle oder Walze aufweist, die in Anlage zu einem über Rollen gehaltenen elastischen Band oder Riemen gehalten wird, um zwischen der Rolle bzw. Walze und dem Band das Material zu klemmen, wobei die Rolle bzw. Walze in Verbindung mit dem Band schwenkbar ist. Ein weiteres derartiges Merkmal ist darin zu sehen, daß zu wenigstens einer, bevorzugt zu beiden axialen Seiten der Rolle bzw. Walze ein Führungsblech erstreckt ist, um größere Formate des Materials darin aufzunehmen und zu führen, beispielsweise das Material innerhalb des Führungsbleches auf die Rolle bzw. Walze aufzuwickeln. Ein weiteres derartiges Merkmal liegt darin, daß die Fördereinrichtung der Abbildungseinrichtung bzw. des Printers und die Bewegungseinrichtung der Materialbearbeitungseinrichtung bzw. der Entwicklungseinrichtung oder der Trocknungseinrichtung jeweils ein Förderband umfassen, wie es beispielsweise aus der gattungsgemäßen Druckschrift hervorgeht. Dabei ist die Weitergabeeinrichtung am Endbereich der Fördereinrichtung bzw. am Anfangsbereich der Bewegungseinrichtung angeordnet.

Zwischen der verwendeten bevorzugten Ausführungsform der Weitergabeeinrichtung gemäß einer der Varianten der Erfindung und der Fördereinrichtung der Abbildungseinrichtung kann noch ein Zuführabschnitt vorgesehen sein, der die vereinzelten Materialabschnitte erfaßt und in die Weitergabeeinrichtung an einer definierten Stelle einleitet. Innerhalb des Printers bzw. auf der Fördereinrichtung des Printers muß der jeweilige Materialabschnitt exakt positioniert sein, damit das abzubildende Bild auf dem Materialabschnitt definiert plaziert werden kann. Aus diesem Grund laßt sich die Positionierung des Materialabschnittes auf der Fördereinrichtung der Abbildungseinrichtung mit großer Genauigkeit und Reproduzierbarkeit vorbestimmen, so daß beispielsweise am Ende der Fördereinrichtung ein Führungsabschnitt, etwa ein Führungsblech oder dergleichen, vorgesehen sein kann. Dieser Führungsabschnitt kann mit aktiven Beförderungsmitteln, beispielsweise aneinander anschließende, angetriebene Walzen oder Rollen, oder mit einem oder mehreren Förderbändern oder -riemen versehen sein, die einen jeweiligen Materialabschnitt definiert in die Weitergabeeinrichtung einführen bzw. an diese übergeben.

Am anderen Schwenkende der Weitergabeeinrichtung kann entsprechend eine Austragseinrichtung vorgesehen sein, die einen jeweiligen Materialabschnitt aus der Weitergabeeinrichtung austrägt und definiert der Bewegungseinrichtung der anschließenden Materialbearbeitungseinrichtung, beispielsweise Entwicklungseinrichtung, weitergibt.

In bezug auf die prinzipielle Ausgestaltung einer entsprechenden Anordnung mit einer Abbildungseinrichtung bzw. einem Printer und einer Materialbearbeitungseinrichtung bzw. einer Entwicklungseinrichtung oder Trocknungseinrichtung sei auf die EP 0 300 967 A1 verwiesen, deren Offenbarungsgehalt ausdrücklich auch in den Offenbarungsgehalt der vorliegenden Schutzrechtsanmeldung einbezogen wird. Einzelne Merkmale des Printers bzw. des Papierprozessors oder der Trocknungsstation bzw. deren Merkmale in verschiedenen Kombinationen können auch zum Gegenstand von Patentansprüchen bzw. Schutzansprüchen der vorliegenden Schutzrechtsanmeldung gemacht werden.

Die in der EP 0 300 967 A1 aufgeführte Anordnung zeigt, daß der Printer zu der Entwicklungsstation im wesentlichen im rechten Winkel angeordnet ist. Es ist jedoch auch möglich, diese Komponenten in anderen Winkeln zueinander anzuordnen, wobei es lediglich auf die Art der Weitergabe zwischen den Komponenten im Zusammenhang mit der vorliegenden Erfindung ankommt.

Nachfolgend wird die vorliegende Erfindung unter Bezugnahme auf die beigefügten Figuren anhand einer bevorzugten Ausführungsform näher erörtert. Dabei zeigen:
- Fig. 1: eine Anordnung gemäß der vorliegenden Erfindung in einer perspektivischen Ansicht;
- Fig. 2: die Anordnung gemäß Fig. 1, wobei die Fördereinrichtung des Printers gemäß Fig. 1 weggelassen ist.

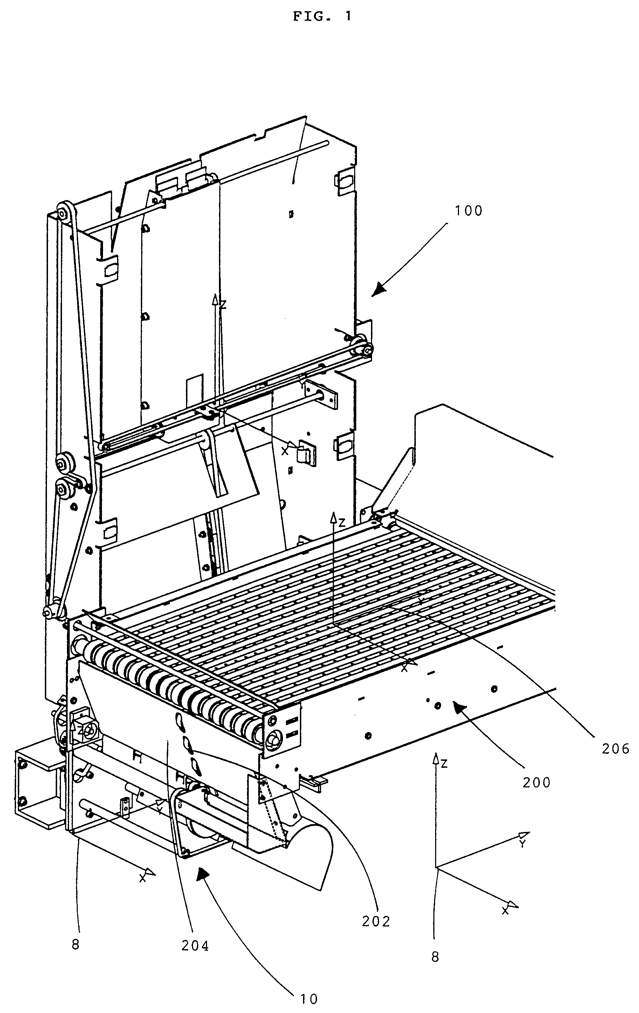

In Fig. 1 ist eine Abbildungseinrichtung 200, wie sie in der hierin vollinhaltlich durch Bezugnahme aufgenommenen EP 0 300 967 A1 detaillierter dargestellt ist, wiedergegeben. Auf der Fördereinrichtung 206 werden von einer Rolle abgetrennte Abschnitte von licht- bzw. fotoempfindlichem Material in den Strahlengang der Belichtungseinrichtung bzw. des Printers 200 geführt, dort angehalten und beispielsweise über eine Kathodenstrählröhre, eine Laserstrahleinrichtung oder einfach über eine Durchlichtbelichtungseinrichtung belichtet, wobei in der Regel als Vorlage ein Negativfilm herangezogen werden kann. Sobald das Papiermaterial belichtet ist, kann die zwischenzeitlich angehaltene Fördereinrichtung 206 wieder in Betrieb gesetzt werden, um den belichteten Materialabschnitt in den Wirkungskreis einer Zufuhreinrichtung 202, 204 zu überführen, die das belichtete Fotomaterial einer Weitergabeeinrichtung 10 in definierter Weise zuführt.

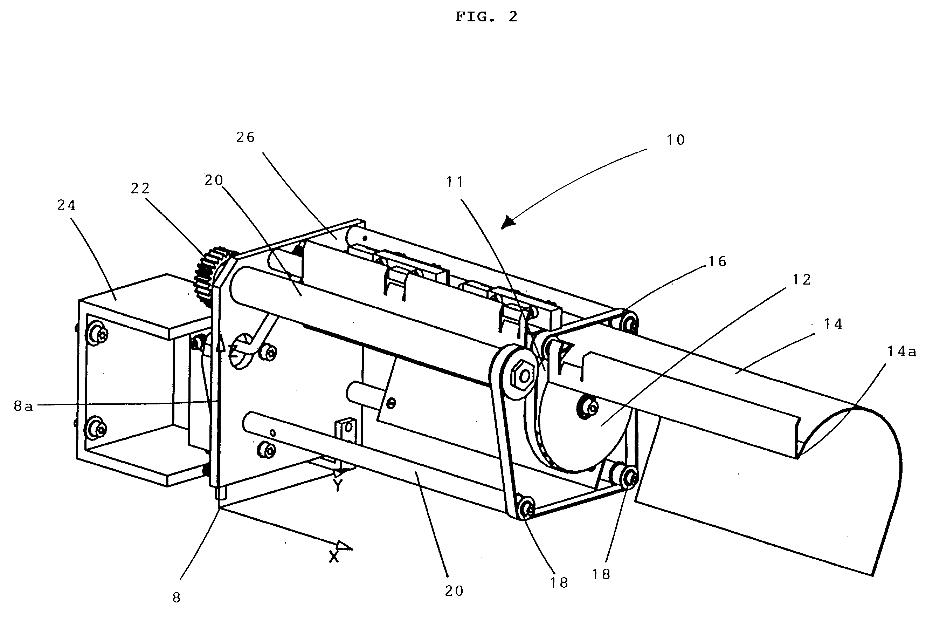

Hier kann am Ende der Fördereinrichtung 206 ein Materialabschnitt für ein Führungsblech (nicht dargestellt) in einen Zwischenraum eingeführt werden, der zwischen dem (nicht dargestellten) Führungsblech und einem Führungsblech 204 vorgesehen ist. Der Transport kann in diesem Zwischenraum durch angetriebene Rollen 202, die beispielsweise mit Gummi beschichtet sind, vorgenommen werden. Am Ende der Zuführeinrichtung 202, 204 ist die Weitergabeeinrichtung 10 vorgesehen, die im einzelnen unter Bezugnahme auf Fig. 2 erläutert wird. Die Weitergabeeinrichtung 10 schwenkt um die Z-Achse des in Fig. 1 dargestellten Koordinatensystems 8 und übergibt, nachdem die Weitergabeeinrichtung 10 um insbesondere 90° geschwenkt worden ist, das transferierte Material (nicht dargestellt) der Bearbeitungseinrichtung 100, beispielsweise zum Weitertransport, zur Entwicklung oder gegebenenfalls zur Trocknung. Auch die Komponente 100 der erfindungsgemäßen Anordnung geht aus der gattungsgemäßen Druckschrift hervor, wobei deren Offenbarungsgehalt auch diesbezüglich wenigstens teilweise in der vorliegenden Schutzrechtsanmeldung beansprucht werden kann.

Gemäß der Erfindung können die Einzelblätter zwar in der überwiegenden Richtung (Z) vertikal hinaufgeleitet werden, sie können gegebenenfalls später auch hinuntergeleitet (Richtung -Z) oder horizontal (Richtung X oder -X) weiterbewegt werden, wobei die weitere Förderrichtung prinzipiell beliebig sein kann.

In Fig. 2 wird die Weitergabeeinrichtung 10 gemäß der vorliegenden Erfindung im einzelnen dargestellt. Wenn ein Materialabschnitt von der Zuführeinrichtung 202, 204 gemäß Fig. 1 herkommt, wird dieser Materialabschnitt in den Zwischenraum 11 zwischen einer Aufwickeleinrichtung 12, hier einem Rad, und einem Riemen 16 aufgewickelt. Das Leitblech 14 sorgt dafür, daß auch größere Formate von Materialabschnitten zwischen dem Rad 12 und dem Riemen 16 aufgewickelt werden können. Hierbei werden die Enden der aufzuwickelnden Abschnitte von dem Leitblech 14 geführt. Der Abschnitt 14a des Leitbleches 14 sorgt dafür, daß das vordere Ende eines Abschnittes überlappend aufgewickelt werden kann.

Der Riemen 16 wird über diverse Umlenkräder 18 geführt, wobei eines der Umlenkräder 18 über einen Zahnradantrieb 20, 22 sowohl den Riemen 16 als auch die Rolle 12 antreiben kann. Das Zahnrad 22 ist dabei an dem Montagegrundkörper 26 mit befestigt und wird mit diesem zusammen aus der Vorzugsrichtung der Fördereinrichtung 206 in die überwiegende Richung der Bewegungseinrichtung der Materialbearbeitungseinrichtung 100 überführt. In dieser Darstellung, wie auch in der Fig. 1, macht das Koordinatensystem 8 deutlich, daß die Materialabschnitte auf der Fördereinrichtung 206 in der Richtung -Y und in der Bearbeitungseinrichtung 100 in der Richtung Z befördert werden, wobei die Richtung Z, die mit dem Bezugszeichen 8a separat gekennzeichnet ist, auch die Schwenkachse für die Weitergabeeinrichtung 10 darstellt.

Der Antrieb des Zahnrades 22 kann über bekannte mechanische Ankopplungseinrichtungen vorgenommen werden, beispielsweise über Kegelzahnräder oder dergleichen.

Die Weitergabeeinrichtung 10 insgesamt wird um einen Halteabschnitt 24 herum geschwenkt, der die Schwenkachse der Weitergabeeinrichtung 10 trägt.

Beiläufig sei angemerkt, daß die einzelnen Bestandteile der Weitergabeeinrichtung 10 natürlich auch anders ausgebildet werden können. So kann anstelle des Riemens 16 in Verbindung mit den Rädern 18 auch eine das Rad 12 umgebende Anordnung von Rädern oder Walzen vorgesehen sein, die den Materialabschnitt halten. Anstelle eines relativ in Axialrichtung gering erstreckten Rades könnte auch eine in Axialrichtung größer bemessene Walze verwendet werden.

Es ist auch möglich, für einen schnelleren Betrieb der Weitergabeeinrichtung an einem Karussell mehr als eine Weitergabeeinrichtung 10 anzuordnen, so daß beispielsweise durch ein Verschwenken um 180° im Falle von zwei an dem Karussell um 180° versetzten Weitergabeeinrichtungen 10 oder beispielsweise durch Verschwenken um 90° bei vier jeweils um 90° versetzt an einem Karussell angeordneten Weitergabeeinrichtungen 10, ein wesentlich schnellerer Betrieb verwirklicht werden kann.

## Patentansprüche

1. Anordnung zur Bearbeitung von licht- bzw. fotoempfindlichem Material,
- mit einer Abbildungseinrichtung (200), in der das zu Einzelabschnitten vereinzelte Material in einer Vorzugsrichtung (-Y) einer Fördereinrichtung (206) beförderbar ist,
- mit einer Materialbearbeitungseinrichtung (100) mit einer Bewegungseinrichtung, in der bevorzugt das mit einer Abbildung versehene, vereinzelte Material in eine überwiegende Richtung (Z, -Z; X, -X) befördert wird,
- wobei die Vorzugsrichtung (-Y) und die überwiegende Richtung (Z, -Z; X, -X) voneinander um einen Winkel abweichen,
- wobei eine Einrichtung (10) am Endabschnitt der Abbildungseinrichtung (200) das vereinzelte Material zur Materialbearbeitungseinrichtung (100) weitergibt,
dadurch **gekennzeichnet**, daß die Weitergabeeinrichtung (10) derart angeordnet ist, daß das vereinzelte licht- bzw. fotoempfindliche Material unter der Fördereinrichtung (206) hindurch an die Materialbearbeitungseinrichtung (100) weitergebbar ist.

2. Anordnung nach Anspruch 1, dadurch **gekennzeichnet**, daß die Weitergabeeinrichtung (10) schwenkbar bzw. lenkbar ausgebildet ist, um das Material von der Fördereinrichtung (206) zu der Bewegungseinrichtung weiterzugeben.

3. Anordnung nach einem der Ansprüche 1 oder 2, dadurch **gekennzeichnet**, daß die Weitergabeeinrichtung (10) eine Festlegungsvorrichtung (16) umfaßt, um das Material bei der Weitergabe bevorzugt definiert zu halten.

4. Anordnung nach einem der Ansprüche 1 bis 3, dadurch **gekennzeichnet**, daß die Weitergabeeinrichtung (10) einen Leitabschnitt (14, 14a) umfaßt, um das Material zu führen und bevorzugt größere Abschnitte des Materials definiert zu führen und/oder bei der Weitergabe aufzunehmen.

5. Anordnung nach einem der Ansprüche 1 bis 4, dadurch **gekennzeichnet**, daß die Weitergabeeinrichtung (10) einen bevorzugt im Querschnitt runden oder kreisförmigen Aufwickelabschnitt (12), etwa ein Rad (12), eine Rolle, Walze oder dergleichen, umfaßt.

6. Anordnung nach einem der Ansprüche 3 bis 5, dadurch **gekennzeichnet**, daß die Festlegungsvorrichtung (16) einen Festlegungsabschnitt, beispielsweise eine Klemmleiste, einen Riemen (16), etwa aus Kunststoff oder Gummi, wenigstens eine Andruckrolle oder dergleichen umfaßt, um das Material bei der Weitergabe festzulegen.

7. Anordnung nach einem der Ansprüche 4 bis 6, dadurch **gekennzeichnet**, daß der Leitabschnitt (14, 14a) ein Führungsblech (14, 14a) umfaßt, um das Material an dem Aufwickelabschnitt (12) zu halten.

8. Anordnung nach einem der Ansprüche 1 bis 4 oder 6, dadurch **gekennzeichnet**, daß die Weitergabeeinrichtung eine insbesondere bewegliche Ablageplattform umfaßt, auf der das Material abgelegt wird, um weitergegeben zu werden, wobei die Ablageplattform bevorzugt schwenkbar ist und eine Beförderung ermöglicht, beispielsweise durch ein umlaufendes Endlosband.

9. Anordnung nach einem der Ansprüche 1 bis 4 oder 6, dadurch **gekennzeichnet**, daß die Weitergabeeinrichtung in einem Winkel zueinander versetzte Walzen bzw. Rollen oder dergleichen umfaßt, derart, daß diese das Material von der Vorzugsrichtung (-Y) zu der überwiegenden Richtung (Z, -Z; X, -X) überleiten.

10. Anordnung nach einem der Ansprüche 1 bis 4 oder 6, dadurch **gekennzeichnet**, daß die Weitergabeeinrichtung ein Band, ein Gliederband oder dergleichen umfaßt, auf dem das Material abgelegt wird und welches das Material von der Vorzugsrichtung (-Y) zu der überwiegenden Richtung (Z, -Z; X, -X) überleitet.

11. Anordnung nach einem der Ansprüche 1 bis 7 dadurch **gekennzeichnet**, daß wenigstens eines der folgenden Merkmale vorgesehen ist:
a) die Weitergabeeinrichtung (10) umfaßt eine Rolle (12) oder Walze, die in Anlage zu einem über Rollen (18) gehaltenen elastischem Band (16) gehalten ist, um zwischen der Rolle (12) bzw. Walze und dem Band (16) das Material zu klemmen, wobei die Rolle bzw. Walze in Verbindung mit dem Band schwenkbar ist;
b) zu wenigstens einer, bevorzugt zu beiden axialen Seiten der Rolle (12) bzw. Walze erstreckt sich ein Führungsabschnitt (14, 14a), um größere Formate des Materials zu führen bzw. zu schützen;
c) die Fördereinrichtung (206) und die Bewegungseinrichtung umfassen jeweils ein Band, einen Riemen oder dergleichen, wobei die Weitergabeeinrichtung (10) am Endbereich der Fördereinrichtung bzw. am Anfangsbereich der Bewegungseinrichtung angeordnet ist.

12. Anordnung nach einem der Ansprüche 1 bis 11, dadurch **gekennzeichnet**, daß am Ende der Fördereinrichtung und/oder am Anfang der Bewegungseinrichtung eine Zufuhreinrichtung (202, 204) bzw. eine Auszugseinrichtung vorgesehen ist, um der Weitergabeeinrichtung (10) das Material zuzuführen bzw. daraus auszuziehen bzw. auszuführen.
